# EUROPEAN PATENT APPLICATION

(11) **EP 3 758 211 A1**
(43) Date of publication of application: **30.12.2020**
(21) Application number: 19182898.7
(22) Date of filing: 27.06.2019
(51) Int. Cl.: H02M 5/12, H02M 5/257, H05B 1/02

(54) **ARC FURNACE POWER SUPPLY WITH RESONANT CIRCUIT**

(71) Applicant: ABB Schweiz AG, 5400 Baden (CH)
(72) Inventor: STEIMER, Peter Karl, 5420 Ehrendingen (CH)
(74) Representative: Qip Patentanwälte Dr. Kuehn & Partner mbB

(57) **Abstract**

A power supply system (12) for an electric arc furnace (10) comprises an AC input (20) connectable to an electrical grid (22) and an AC output (24) for supplying at least one power electrode (14) of the arc furnace (10); a resonant circuit (46a, 46b, 46c) interconnected between the AC input (20) and the AC output (24). The resonant circuit (46a, 46b, 46c) comprises a controllable bypass switch (60) for connecting and disconnecting a circuit input (56) and a circuit output (58) of the resonant circuit (46a, 46b, 46c) and a capacitor (64) and a main inductor (66) connected in parallel with the bypass switch (60).

## Description

### FIELD OF THE INVENTION

The invention relates to the field of arc furnaces. In particular, the invention relates to a power supply system for an electric arc furnace, a method and a controller for controlling the power supply system as well as to an arc furnace with such a power supply system.

### BACKGROUND OF THE INVENTION

Electric arc furnaces are often directly connected to an AC grid via a transformer. It then may be difficult to limit the electrode current during operation, which may limit the electrode usage and the productivity. Additionally, the transformer may need then a costly on-load tap changer system, which is often used and the arc furnace may generate flicker in the AC grid. Therefore, an additional static var compensator may be necessary to mitigate the flicker issues.

In EP 0 589 544 B1 and US 6 603 795 B2, an arc furnace power supply is shown, which is adapted for clipping the electrode current with series-connected antiparallel thyristors with or without a parallel inductor. In such a way, the productivity of the arc furnace may be improved. However, by clipping the current, an internal resistance of the arc furnace may be increased more than necessary, which may reduce the efficiency of the arc furnace.

### DESCRIPTION OF THE INVENTION

It is an objective of the invention to provide an arc furnace power supply, with controllable electrode current and high efficiency.

This objective is achieved by the subject-matter of the independent claims. Further exemplary embodiments are evident from the dependent claims and the following description.

A first aspect of the invention relates to a power supply system for an electric arc furnace. An electric arc furnace may be a device, which is adapted for melting or smelting metal materials with the aid of an arc that is produced by an electric current. The electric current is produced by the power supply system, which may be connected between a medium AC electrical grid and electrodes of the arc furnace. The power supply system also may comprise a transformer, which transforms a medium AC input voltage into a low AC output voltage, which is supplied to the electrodes.

A medium voltage may be a voltage between 1 kV and 20 kV. A low voltage may be a voltage below 1 kV. It has to be noted that the current through the electrodes may be higher than 1000 A.

The power supply system may be a multi-phase system having several, such as three, phases. The input voltage may be a three-phase voltage, with, for example, 50 or 60 Hz.

According to an embodiment of the invention, the power supply system comprises an AC input, which may comprise one or more phases, connectable to an electrical grid and an AC output, which may comprise one or more phases, for supplying at least one power electrode of the arc furnace. The AC input may comprise three phases. Also, the AC output may comprise three phases.

According to an embodiment of the invention, the power supply system comprises a resonant circuit interconnecting the AC input and the AC output, wherein the resonant circuit comprises a controllable bypass switch for connecting and disconnecting a circuit input and a circuit output of the resonant circuit. The resonant circuit may comprise a capacitor and a main inductor connected in parallel with the bypass switch. The capacitor and the main inductor may be connected in series and/or may be connected between the circuit input and the circuit output. The resonant circuit may be interconnected in a phase of the AC input and/or in a phase of the AC output.

By controlling the bypass switch, a current through the resonant circuit may be controlled, when the bypass switch is open, a current through the resonant circuit solely may flow from the circuit input through the capacitor and a main inductor to the circuit output and vice versa. In the case, the bypass switch is closed, the current also may flow from the circuit input through the bypass switch to the circuit output and vice versa. Additionally, a circular current may flow through the resonant circuit, when the bypass switch is closed. This circular current may flow through the bypass switch, the capacitor and the main inductor.

By controlling the current through the resonant circuit in this way, the current through the power supply system may be controlled. In particular, the current through the power supply device may be controlled and/or adjusted to a specific nominal and/or defined current, which may be lower than a maximal current that may be generated by the power supply system.

The capacitor of the capacitor and the inductance of the inductor may be chosen, such that the resonant circuit has a low impedance at the ground frequency of the AC voltage processed by the arc furnace, i.e. the AC voltage from the electrical grid. The impedance at this frequency may be lower as at other frequencies and/or may have a minimum. In such a way, an internal resistance of the arc furnace may be reduced.

According to an embodiment of the invention, a further inductor is connected in series with the bypass switch between the input and the output. The further inductor may be decoupled from the current through the resonant circuit, when the bypass switch is open.

According to an embodiment of the invention, the further inductor is connected in parallel with the capacitor and the main inductor. When the bypass switch is closed, a current through the bypass switch also may flow through the further inductor. Furthermore, the further inductor may contribute to the inductance of the resonant circuit in view of circular currents.

According to an embodiment of the invention, the main inductor has a higher inductance as the further inductor. For example, the main inductor may have an inductance at least 10 times higher as the further inductor.

According to an embodiment of the invention, the bypass switch is composed of semiconductor switches. For example, the bypass switch may comprise one or more transistors or thyristors, such as IGBTs, IGCT, etc.

According to an embodiment of the invention, the bypass switch is a bidirectional switch. This may be achieved by connecting two unidirectional semiconductor switches anti-parallel to each other.

According to an embodiment of the invention, the bypass switch comprises two anti-parallel semiconductor switches, such as two anti-parallel thyristors. Thyristors are adapted for switching high currents as usually are present in the power supply of an arc furnace.

According to an embodiment of the invention, the power supply system further comprises a transformer, which is interconnected between the AC input and the AC output of the power supply system. As already described, the transformer, which may be a multi-phase transformer, may transform a higher AC input voltage into a lower AC output voltage.

According to an embodiment of the invention, the transformer may be interconnected between the AC input and the resonant circuit. In other words, the resonant circuit may be provided on the side of the power supply system with the higher voltage.

According to an embodiment of the invention, the transformer may be interconnected between the resonant circuit and the AC output. In other words, the resonant circuit may be provided on the side of the power supply system with the lower voltage.

According to an embodiment of the invention, the power supply system further comprises a harmonic filter interconnected in the AC input. With the harmonic filter, higher order harmonics in the AC input voltage, which may be generated by components of the arc furnace, may be filtered out. The harmonic filter may comprise at least two filter components, each of which comprises a filter capacitor and a filter inductor and each of which is adapted to another higher order harmonic of a supply voltage, i.e. the AC input voltage.

The harmonic filter may be a capacitive and/or inductive filter connected in parallel with the AC input. In the case of a multi-phase system, the harmonic filter components may star-connect the phases of the AC input. It has to be noted that also a series-connected filter may be interconnected into the AC input.

According to an embodiment of the invention, the power supply system further comprises an active inductive reactor interconnected into the AC input, wherein the active inductive reactor comprises a bypass switch and an inductor connected to the AC input. The bypass switch of the active inductive reactor may be designed as the bypass switch of the resonant circuit, for example with two anti-parallel thyristors. In the case of a multi-phase system, the active inductive reactor may have reactor branches, which star-connect the phases of the AC input.

According to an embodiment of the invention, the power supply system further comprises a compensating converter interconnected into the AC input. The compensating converter may be voltage-source based STATCOM. In the case of a multi-phase system, the compensating converter may have converter branches, which star-connect the phases of the AC input.

The active inductive reactor and/or the compensating converter may be controlled by a controller of the power supply system and/or may be used for compensating variations of the power flow through the power supply system and/or for compensating voltage variations in the AC input.

According to an embodiment of the invention, the active inductive reactor and/or the compensating converter are controlled to minimize a flicker in the AC input. Flicker may be minimized at the point-of-common connection of the arc furnace to the electrical grid. The flicker reduction may be a second control objective in addition to a control of the power flow to the arc furnace.

Flicker in the electrical grid may be fluctuations in the voltage of the grid and may be determined based on voltage measurements in the AC input. The standard IEC 61000-4-15 provides methods and/or formulas for estimating flicker.

According to an embodiment of the invention, the AC input has at least two phases, such as three phases, and/or the AC output has at least two phases, such as three phases. A resonant circuit as described in the above and in the following may be interconnected in each phase of the AC input or the AC output. In the case of a multi-phase system, every phase of the side of the power supply before or after the transformer may be provided with a resonant circuit.

Further aspects of the invention relate to a method and a controller for controlling the power supply system as described in the above and in the following. It has to be understood that features of the method as described in the above and in the following may be features of the controller and/or the power supply system as described in the above and in the following. The controller may be adapted for automatically performing the method.

According to an embodiment of the invention, the method comprises: determining an electrode current supplied to the at least one electrode; and controlling the bypass switch, such that the electrode current is adjusted to a defined current, such as a nominal current. A current through the power supply system may be measured by the controller at the input side and/or at the output side. Therefrom, the electrode current may be determined. Depending on the needed power to be supplied to the electrodes, which for example may depend on the phase of the melting process and/or the amount of melted material, a defined current may be provided and the controller may adjust the electrode current to this current. The defined current may be provided by the controller, for example based on measurements in the power supply system.

The control may be performed by opening and closing the bypass switch accordingly. This may be done with a specific frequency.

According to an embodiment of the invention, a duty cycle of the bypass switch is adjusted to control the electrode current. The duty cycle of the bypass switch may be a time interval of a period of the current through the resonant circuit, in which the bypass switch is open, i.e. conducting. A longer the duty cycle as higher the current.

According to an embodiment of the invention, the method further comprises: detecting an overvoltage and/or a surge current in the resonant circuit; and protecting the resonant circuit with the bypass switch, when an overvoltage and/or a surge current is detected, by opening and/or closing the bypass switch. The bypass switch also may be used to protect the resonant circuit against overvoltage and/or surge currents, for example during start-up and/or transient operation. The voltage and/or the current in the resonant circuit may be measured by the controller, which also may compare these values with thresholds, which indicate an overvoltage and/or a surge current. When the corresponding values exceed the threshold, the protection function may be activated. For example, the bypass switch may be closed to reduce the voltage across the capacitor and the main inductor and/or to reduce a current through the capacitor and the main inductor.

A further aspect of the invention relates to an electric arc furnace, which comprises a power supply system as described in the above and the following.

According to an embodiment of the invention, the electric arc furnace furthermore comprises a vessel for receiving metal material and/or power electrodes for melting the metal material, when supplied with current from the power supply system. The power electrodes also may have a mechanical mechanism, which is adapted for adjusting a distance of the electrodes to the metal material. The controller of the power supply system also may control this mechanism for adjusting the impedance of the system comprising the electrodes and the metal material. Less use of a tap changer and/or less electrode movements are expected. Tap changers may even be eliminated.

These and other aspects of the invention will be apparent from and elucidated with reference to the embodiments described hereinafter.

### BRIEF DESCRIPTION OF THE DRAWINGS

The subject-matter of the invention will be explained in more detail in the following text with reference to exemplary embodiments which are illustrated in the attached drawings.
Fig. 1 shows a schematic circuit diagram of an arc furnace according to an embodiment of the invention.
Fig. 2 shows a schematic circuit diagram of an arc furnace according to a further embodiment of the invention.
Fig. 3 shows a resonant circuit for the arc furnace of Fig. 1 and 2.
Fig. 4 shows a compensating converter for the arc furnace of Fig. 1 and 2.
Fig. 5 shows an active inductive reactor for the arc furnace of Fig. 1 and 2.
Fig. 6 shows a flow diagram for a method for controlling the arc furnace of Fig. 1 and 2.

The reference symbols used in the drawings, and their meanings, are listed in summary form in the list of reference symbols. In principle, identical parts are provided with the same reference symbols in the figures.

### DETAILED DESCRIPTION OF EXEMPLARY EMBODIMENTS

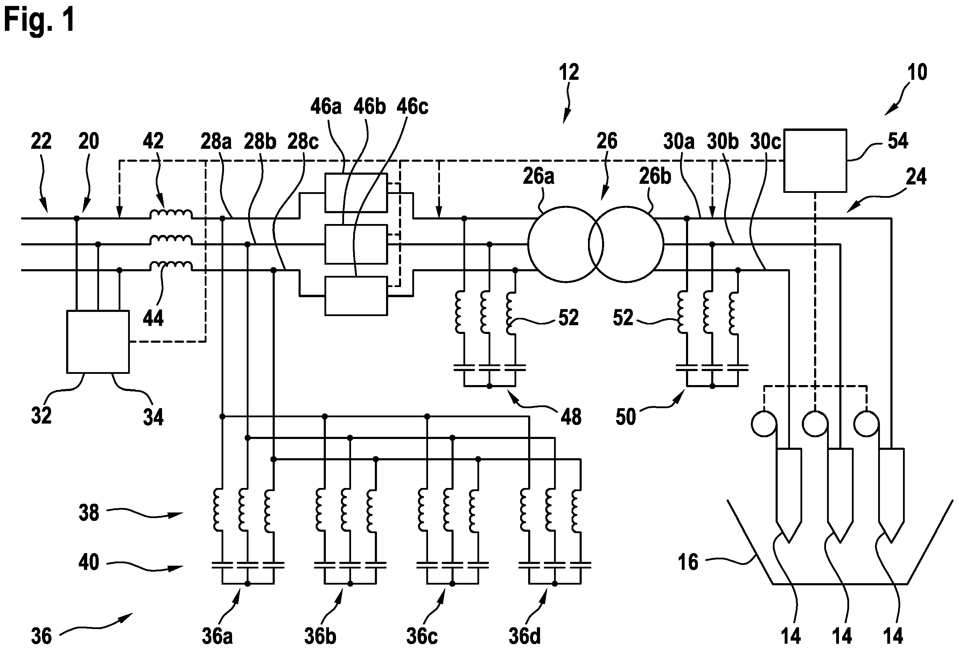

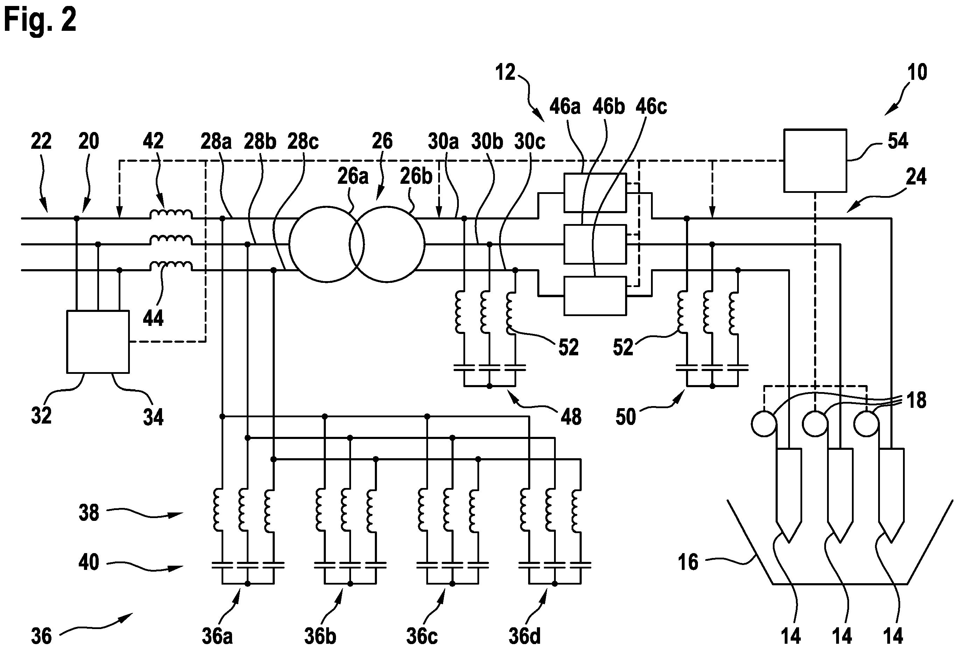

Fig. 1 and 2 show an arc furnace 10 with a power supply system 12, which supplies electrodes 14 of the arc furnace 10 with electrical power. The electrodes 14 may be provided in a vessel 16, which is adapted for accommodating metal material. When the electrodes 14 are supplied with current, an electrical arc is generated and the metal material is melted. The electrodes may be moved in the vessel with the aid of mechanical actuators 18. In such a way, the length of the arc may be controlled.

The power supply system 12 is connected with an AC input 20 to an electrical grid 22 and supplies with an AC output 24 the electrodes 14. The AC input 20 and the AC output 24 are galvanically separated by a transformer 26. The transformer 26 transforms a medium AC voltage from the electrical grid 22 into a low AC voltage at the AC output 24. Both voltages may have a frequency of 50 Hz or 60 Hz.

As shown in Fig. 1 and 2, the power supply system 12 may be a three-phase system. The AC input voltage may have three components and the power supply system 12 may have three phases 28a, 28b, 28c at the primary, medium voltage side of the transformer 26. As shown, the power supply system 12 also may have three phases 30a, 30b, 30c at the secondary, low voltage side of the transformer 26. However, it is also possible that a different number of phases are present as well on the primary side as on the secondary side. It is also possible that the numbers of phases are different on both sides, for example, when the transformer 26 is designed with more than three windings at the secondary side.

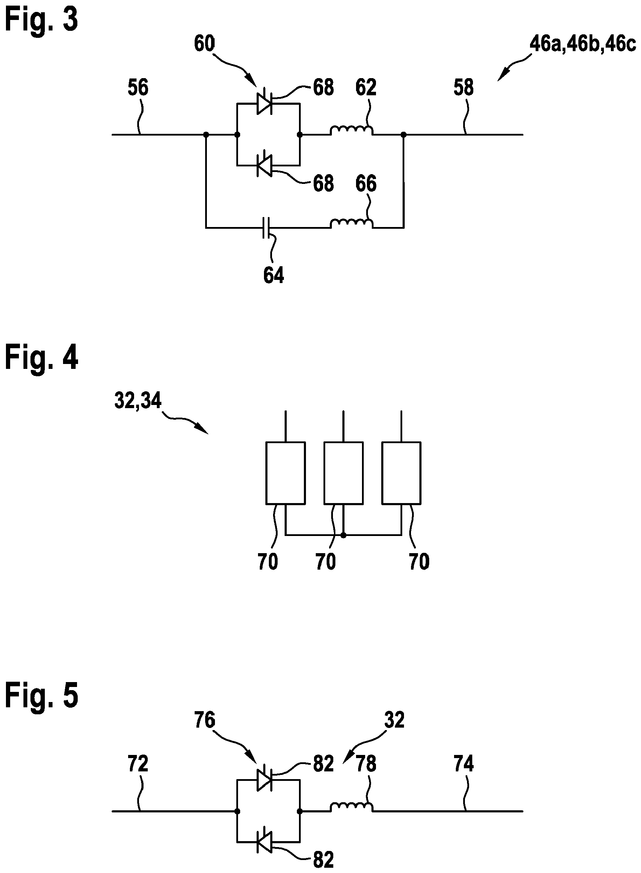

It may be that an active inductive reactor 32 and/or a compensating converter 34 is interconnected into and/or connected to the AC input 20, which is used for controlling flicker, which is generated by the arc furnace 10. The active inductive reactor 32 and/or a compensating converter 34 may be connected in parallel to the AC input 20. The components 32, 34 will be described in more detail below with respect to Fig. 4 and 5.

Furthermore, a harmonic filter 36 may be interconnected into and/or connected to the AC input 20. The harmonic filter 36 may be connected in parallel to the AC input 20. The harmonic filter 36 may comprise several filter components 36a, 36b, 36c, 36d, each of which is adapted to filter a specific higher order harmonic out of the AC voltage at the AC input 20. For example, the filter components 36a, 36b, 36c, 36d may be adapted for filtering out the 5^{th}, 7^{th}, 11^{th} and 13^{th} higher order harmonic. Each of the filter components 36a, 36b, 36c, 36d may be an LC filter and may comprise a capacitor 38 and an inductor 40, which may be connected in series. In the present case of a system with three phases 28a, 28b, 28c, each of the filter components 36a, 36b, 36c, 36d may comprise for each phase a capacitor 38 and an inductor 40, which are star-connected.

It also may be that a line filter 42, which is series-connected into the AC input 20, is present, which line filter 42 may comprise an inductor 44, which is series-connected into each phase 28a, 28b, 28c.

As shown in Fig. 1, the power supply system 12 furthermore may comprise a resonant circuit 46a, 46b, 46c, which is series-connected into each phase 28a, 28b 28c of the primary side. As shown in Fig. 2, alternatively or additionally, a resonant circuit 46a, 46b, 46c may be series-connected into each phase 30a, 30b, 30c of the secondary side. The resonant circuits 46a, 46b, 46c are used for current limitation and/or power control and will be described in more detail with respect to Fig. 3.

It may be possible that a passive filter/reactor 48 is connected between the circuits 46a, 46b, 46c and the transformer 26 and/or that a passive filter/reactor 50 is connected between the transformer 26 and the AC output 24. Such a passive filter/reactor 48 (or 50) may comprise three star-connected inductors 52, each of which is connected to a phase 28a, 28b, 28c (or 30a, 30b, 30c) of the primary side (or secondary side) of the power supply system 12.

Fig. 1 and 2 also show a controller 54 for controlling the arc furnace and the power supply system 12. The controller 54 may receive measurement values from voltages and/or currents in the power supply system 12, such as an AC input voltage, an AC input current, an intermediate voltage and an intermediated current between the resonant circuits 46a, 46b, 46c and the transformer, an AC output voltage and an AC output current. All these quantities may be multi-phase quantities.

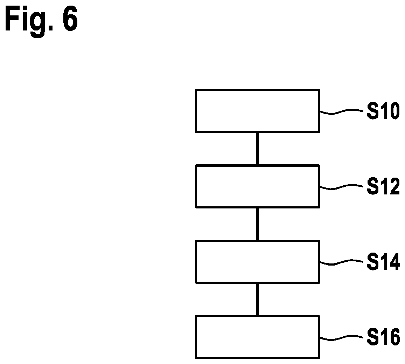

Form these measurements, values and based on nominal quantities, such as a nominal electrode current, a nominal power supplied to the electrodes 14, a maximal flicker, etc., the controller may control the movement of the electrodes 14, i.e. the mechanical actuators 18, the active inductive reactor 32, the compensating converter 34 and the resonant circuits 46a, 46b, 46c. This will also be described in more detail with respect to Fig. 6.

Fig. 3 shows one of the resonant circuits 46a, 46b, 46c, which may be equally designed. The resonant circuit 46a, 46b, 46c comprises a circuit input 56 and a circuit output 58, with which it is interconnected in the respective phase 28a, 28b, 28c, 30a, 30b, 30c. A bypass switch 60 and an inductor 62 are series-connected between the input 56 and the output 58. Furthermore, a capacitor 64 and a main inductor 66, which may be series-connected, are connected between the input 56 and the output 58. The filter capacitor 64 and the main inductor 66 are connected in parallel to the bypass switch 60.

The inductor 62 is optional. It may have an inductance at least 10 times smaller than the inductor 66. With the inductor 62, an overall inductance of the resonant circuit 46a, 46b, 46c may be set.

The bypass switch 60 is a controllable, bidirectional switch, which is composed of two anti-parallel thyristors 68. The controller 54 may control the bypass switch 60 to be opened (conducting) or closed (isolating). By controlling the duty cycle of the bypass switch 60, the controller 54 may control the average current through the bypass switch 60.

When the bypass switch 60 is closed, the filter capacitor 64, the main inductor 66 and the optional inductor 62 form a resonant circuit. The resonant circuit 46a, 46b, 46c therefore may be seen as controllable resonant circuit. A circulating current may form in the resonant circuit 46a, 46b, 46c, which may be used for lowering the current through the resonant circuit 46a, 46b, 46c and therefore the current through the power supply system 12.

Fig. 4 shows the active inductive reactor 32 and/or the compensating converter 34 in more detail. In the case of an active inductive reactor 32, each branch 70 may be as shown in Fig. 5. The branches 70 may be star-connected at one end and connected to one of the phases 28a, 28b, 28c with the other end.

In the case of a compensating converter 34, each branch 70 may be a converter (such as an active controllable bridge converter) with an internal energy storage, for example in the form of a capacitor. The branches 70 may form a static var compensator, which may be controlled by the controller 54.

Fig. 5 shows a phase of an active inductive reactor 32. The active inductive reactor 32 comprises an input 72 and an output 74. A bypass switch 76 and an inductor 78 are series-connected between the input 72 and the output 74. The bypass switch 76 is a controllable, bidirectional switch, which is composed of two anti-parallel thyristors 82.

Fig. 6 shows a flow diagram of a method that may performed automatically by the controller 54.

In step S10, the controller 54 measures one or more currents and/or one or more voltages in the power supply system 12. These voltages or currents may be an AC input voltage, an AC input current, an intermediate voltage and/or an intermediated current between the resonant circuits 46a, 46b, 46c and the transformer 26, an AC output voltage and/or an AC output current.

From the measured quantities, an electrode current supplied to the electrodes 14 may be determined. For example, the electrode current may be directly measured as the AC output current or may be estimated from other measured quantities.

In step S12, the bypass switch 60 is controlled, such that the electrode current is adjusted to a defined current. The defined current may be provided by an outer control loop or may be determined by the controller 54 itself, for example, in dependence of an operation condition and/or a power that should be supplied to the electrodes 14.

The control of the bypass switch 60 may be performed, such that a duty cycle of the bypass switch 60 is adjusted to control the electrode current. After a zero crossing of the current through the respective resonant circuit 46a, 46b, 46c, the thyristors 68 of the resonant circuit may switch off automatically and the controller 54 may wait for a specific waiting time before firing the thyristors and switching them on again. As longer the waiting time as shorter the duty cycle and as smaller the current through the resonant circuits 46a, 46b, 46c.

In step S14, an overvoltage and/or a surge current in the resonant circuit 46a, 46b, 46c is detected by the controller based on the measured quantities. In the case, such as fault is detected, the controller 54 protects the resonant circuit 46a, 46b, 46c with the bypass switch 60 by opening and/or closing the bypass switch 60 for a time, which may be longer than a period of the AC current, i.e. the switching may be different from adjusting the duty cycle.

In step S16, the controller 54 also determines a flicker value from the measured quantities, for example from the AC input voltage. The active inductive reactor 32 and/or the compensating converter 34 then may be controlled by the controller 54 to minimize the flicker value. It also may be that a further control objective of the resonant circuits 46a, 46b, 46c is to minimize the flicker and the resonant circuit 46a, 46b, 46c may be controlled accordingly.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SYMBOLS

- 10: arc furnace
- 12: power supply system
- 14: electrode
- 16: vessel
- 18: mechanical actuator
- 20: AC input
- 22: electrical grid
- 24: AC output
- 26: transformer
- 28a: primary side phase
- 28b: primary side phase
- 28c: primary side phase
- 30a: secondary side phase
- 30b: secondary side phase
- 30c: secondary side phase
- 32: active inductive reactor
- 34: compensating converter
- 36: harmonic filter
- 36a: filter component
- 36b: filter component
- 36c: filter component
- 36d: filter component
- 38: filter capacitor
- 40: filter inductor
- 42: line filter
- 44: filter inductor
- 46a: resonant circuit
- 46b: resonant circuit
- 46c: resonant circuit
- 48: passive filter and/or reactor
- 50: passive filter and/or reactor
- 52: filter inductor
- 54: controller
- 56: circuit input
- 58: circuit output
- 60: bypass switch
- 62: inductor
- 64: capacitor
- 66: main inductor
- 68: thyristor
- 70: branch
- 72: input
- 74: output
- 76: bypass switch
- 78: inductor
- 82: thyristor

## Claims

1. A power supply system (12) for an electric arc furnace (10), the power supply system (12) comprising:
an AC input (20) connectable to an electrical grid (22) and an AC output (24) for supplying at least one power electrode (14) of the arc furnace (10);
a resonant circuit (46a, 46b, 46c) interconnected between the AC input (20) and the AC output (24);
wherein the resonant circuit (46a, 46b, 46c) comprises a controllable bypass switch (60) for connecting and disconnecting a circuit input (56) and a circuit output (58) of the resonant circuit (46a, 46b, 46c);
wherein the resonant circuit (46a, 46b, 46c) comprises a capacitor (64) and a main inductor (66) connected in parallel with the bypass switch (60).

2. The power supply system (12) of claim 1,
wherein a further inductor (62) is connected in series with the bypass switch (60) between the circuit input (56) and the circuit output (58).

3. The power supply system (12) of claim 2,
wherein the further inductor (62) is connected in parallel with the capacitor (64) and the main inductor (66); and/or
wherein the capacitor (64) and the main inductor (66) are connected in series.

4. The power supply system (12) of claim 2 or 3,
wherein the main inductor (66) has a higher inductance as the further inductor (62).

5. The power supply system (12) of one of the previous claims,
wherein the bypass switch (60) is composed of semiconductor switches (68); and/or
wherein the bypass switch (60) is a bidirectional switch.

6. The power supply system (12) of one of the previous claims,
wherein the bypass switch (60) comprises two anti-parallel semiconductor switches (68); and/or
wherein the bypass switch (60) comprises two anti-parallel thyristors (68).

7. The power supply system (12) of one of the previous claims, further comprising:
a transformer (26) interconnected between the AC input (20) and the resonant circuit (46a, 46b, 46c); or
a transformer interconnected between the resonant circuit (46a, 46b, 46c) and the AC output (24).

8. The power supply system (12) of one of the previous claims, further comprising:
a harmonic filter (36) interconnected in the AC input (20);
wherein the harmonic filter (36) comprises at least two filter components (36a, 36b, 36c, 36d), each of which comprises a filter capacitor (38) and a filter inductor (40) and each of which is adapted to another higher order harmonic of an AC input voltage.

9. The power supply system (12) of one of the previous claims, further comprising:
an active inductive reactor (32) interconnected into the AC input (20), wherein the active inductive reactor (32) comprises a bypass switch (76) and an inductor (78) connected to the AC input (20); and/or
a compensating converter (34) interconnected into the AC input (20);
wherein the active inductive reactor (32) and/or the compensating converter (34) are controlled to minimize a flicker in the AC input (20).

10. The power supply system (12) of one of the previous claims,
wherein the AC input (20) has at least two phases (28a, 28b, 28c) and/or the AC output has at least two phases (30a, 30b, 30c);
wherein a resonant circuit (46a, 46b, 46c) is interconnected in each phase (28a, 28b, 28c) of the AC input (20) and/or in each phase (30a, 30b, 30c) of the AC output (24).

11. A method for controlling a power supply system (12) according to one of the previous claims, the method comprising:
determining an electrode current supplied to the at least one electrode (14);
controlling the bypass switch (60), such that the electrode current is adjusted to a defined current.

12. The method of claim 11,
wherein a duty cycle of the bypass switch (60) is adjusted to control the electrode current.

13. The method of claim 11 or 12, further comprising:
detecting an overvoltage and/or a surge current in the resonant circuit (46a, 46b, 46c);
protecting the resonant circuit (46a, 46b, 46c) with the bypass switch (60), when an overvoltage and/or a surge current is detected, by opening and/or closing the bypass switch (60).

14. A controller (54) for an electric arc furnace (10) with a power supply system (12) according to one of the previous claims adapted for performing the method of claims 11 to 13.

15. An electric arc furnace (10), comprising:
a power supply system (12) according to one of the claims 1 to 10;
a vessel (16) for receiving metal material;
power electrodes (14) for melting the metal material, when supplied with current from the power supply system (12).
